# FASCICULE DE BREVET EUROPEEN

(11) **EP 0 740 518 B1**
(45) Date de publication et mention de la délivrance du brevet: **10.02.1999**
(21) Numéro de dépôt: 94913158.5
(22) Date de dépôt: 12.04.1994
(51) Int. Cl.: A47J 36/38

(54) **APPAREIL DE CUISSON, TEL QUE PAR EXEMPLE UNE FRITEUSE, COMPORTANT UN DISPOSITIF DE CONDENSATION DES VAPEURS DE CUISSON**
KOCHGERÄT, BEISPIELSWEISE FRITEUSE
COOKING APPARATUS, SUCH AS DEEP FRYER, COMPRISING A COOKING VAPOUR CONDENSER DEVICE

(30) Priorité: 16.04.1993 FR 9304538
(43) Date de publication de la demande: 06.11.1996
(73) Titulaire: MOULINEX S.A., F-93170 Bagnolet (FR)
(72) Inventeur: BAILLIEUL, Philippe Louis Robert, F-14280 Saint-Germain-la-Blanche-Herbe (FR); BOIS, Bernard Marcel, F-14000 Caen (FR); CHARTRAIN, Pierre, F-14540 Solier-Bourguebus (FR); MARLIN, Pascal, F-14610 Cambes-en-Plaines (FR); MIRIEL, Jean Victor, F-14123 Ifs (FR)
(74) Mandataire: Busquets, Jean-Pierre
(86) Numéro de dépôt international: FR9400407
(87) Numéro de publication internationale: WO9423626

(56) Documents cités:
- EP-A- 0 095 797
- EP-A- 0 275 127
- DE-A- 2 627 022
- DE-A- 4 106 348
- DE-U- 8 502 304
- US-A- 4 924 935
- PATENT ABSTRACTS OF JAPAN vol. 16, no. 148 (C-0928) 13 Avril 1992 & JP,A,04 005 924 (MATSUSHITA ELECTRIC IND CO LTD) 9 Janvier 1992

## Description

La présente invention se rapporte aux appareils de cuisson, tels que par exemple des friteuses à usage ménager, comprenant un boîtier ouvert destiné à être fermé par un couvercle pendant la phase de cuisson, une cuve de cuisson placée dans le boîtier, et un dispositif de condensation des vapeurs de cuisson comportant une boîte étanche placée à l'extérieur du boîtier, reliée à la cuve par des moyens de liaison permettant l'écoulement des vapeurs de cuisson, et contenant des cassetttes réfrigérantes hermétiques qui s'étendent verticalement dans la boîte et qui sont disposées en regard et à légère distance l'une de l'autre pour former entre elles un canal condenseur à travers lequel s'écoulent les vapeurs de cuisson.

Un tel appareil de cuisson muni d'un dispositif de condensation à plusieurs cassettes réfrigérantes est connu du document DE-A-4 106 348.

On connaît également un apppareil de cuisson équipé d'un dispositif de condensation du type comprenant un réservoir d'eau froide qui est disposé sur le côté du boîtier de l'appareil et dans lequel est monté en position verticale un tuyau hélicoïdal rigide faisant office de canal condenseur. Ainsi, lors de la cuisson, les vapeurs contenant les substances odorantes inopportunes s'écoulent et se condensent dans le tuyau refroidi par l'eau, le condensat étant recueilli dans un bac collecteur placé en dessous du réservoir et dans lequel débouche la sortie du tuyau. Toutefois, dans ce type de dispositif de condensation, le tuyau hélicoïdal destiné à servir de canal condenseur est une pièce compliquée qui est sujette à un montage difficile dans le réservoir, d'où un dispositif de condensation complexe et onéreux.

L'invention a notamment pour but de pallier ces inconvénients.

Selon l'invention, un appareil de cuisson tel que décrit précédemment, est plus particulièrement caractérisé en ce que les cassettes étant au nombre de deux, lesdites cassettes comportent respectivement, en vis-à-vis, deux faces latérales qui présentent chacune, en section verticale, un profil ondulé constituant un des deux bords du canal condenseur, le profil ondulé de l'une desdites faces latérales épousant, à légère distance, celui de l'autre face latérale.

Grâce à cette réalisation du canal condenseur à bords ondulés formant, en section verticale, un serpentin réalisé directement à partir des deux cassettes, l'échange thermique entre la vapeur d'eau et l'agent réfrigérant contenu dans les deux cassettes est optimisé.

De préférence, les deux cassettes contiennent de l'eau congelée qui favorise le refroidissement des vapeurs, de sorte qu'il se produit un échange de chaleur et une condensation efficaces.

D'autres caractéristiques et avantages de l'invention ressortiront d'ailleurs de la description qui va suivre d'un mode particulier pris à titre d'exemple non limitatif, en référence aux dessins annexés dans lesquels :
- la figure 1 est une vue schématique en coupe verticale d'un appareil de cuisson, tel qu'une friteuse, selon l'invention ;
- la figure 2 est une vue schématique en coupe verticale, à plus grande échelle, du dispositif de condensation illustré figure 1 ;
- la figure 3 est une vue schématique en perspective de deux cassettes réfrigérantes montrées en position éloignée ; et
- la figure 4 est une vue en coupe verticale des deux cassettes de la figure 3, montrées en position rapprochée.

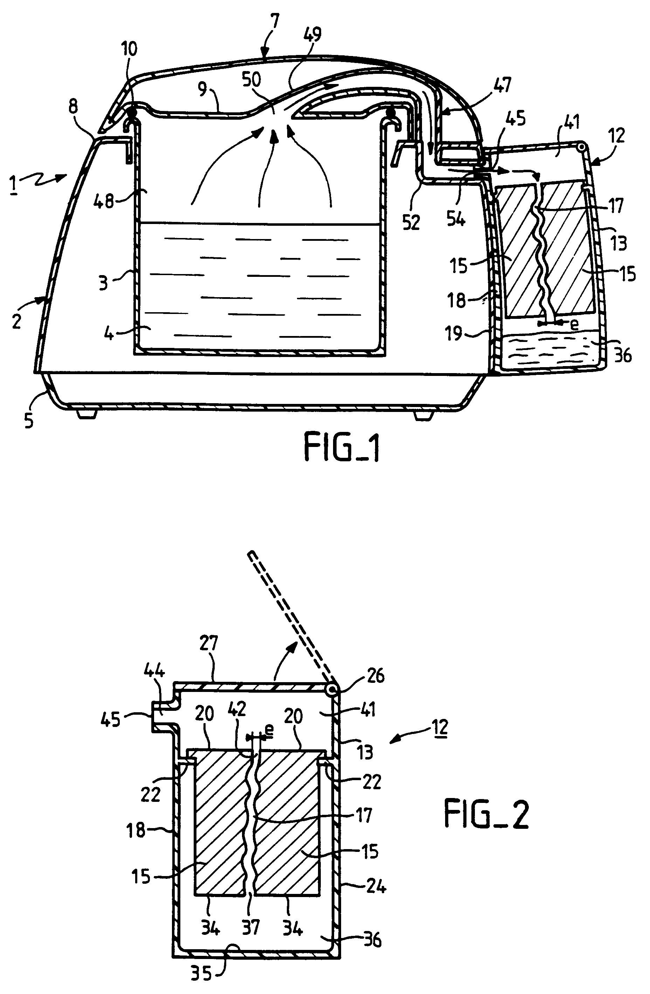

L'appareil de cuisson 1 représenté schématiquement à la figure 1 est une friteuse ménagère qui comprend un boîtier ou récipient ouvert 2, de forme sensiblement parallélépipédique, dans lequel est placée une cuve métallique 3 contenant un bain de cuisson 4. Le boîtier 2 est supporté par un socle 5, de préférence réalisé d'une seule pièce avec le boîtier, et est destiné à être fermé par un couvercle 7 monté articulé de façon amovible sur un bord supérieur 8 du boîtier grâce à un moyen d'articulation démontable (non figuré).

Le couvercle 7 comporte sur sa face interne 9 un joint 10 conformé de manière à réaliser l'étanchéité entre la cuve de cuisson 3 et le couvercle 7 lorsque ce dernier est fermé, comme illustré à la figure 1.

Le boîtier 2, le socle 5 et le couvercle 7 sont moulés en une matière plastique telle que, par exemple, le polypropylène qui est particulièrement économique et d'un entretien facile.

Comme le montre la figure 1, la friteuse 1 comprend également un dispositif de condensation de vapeur 12, du type à échange de chaleur, qui est placé à l'extérieur du boîtier 2.

Selon l'invention, le dispositif de condensation 12 comporte une boîte étanche 13 contenant des cassettes ou blocs réfrigérants hermétiques 15 qui sont agencés de manière à ménager entre eux un canal condenseur 17.

Ces cassettes 15 contiennent de l'eau congelée comme agent réfrigérant.

Dans l'exemple de réalisation illustré aux figures 1 et 2, la boîte 13 est de forme sensiblement parallélépipédique et est montée de façon amovible, par l'une (18) de ses faces latérales, en appui contre la face arrière 19 (figure 1) du boîtier 2 grâce à un moyen de fixation démontable (non figuré). Bien entendu, la boîte 13 pourrait être appliquée sur une face latérale du boîtier 2, sans sortir pour cela du cadre de l'invention.

Dans cet exemple, figures 1 et 2, les cassettes 15 sont au nombre de deux et sont de mêmes dimensions en étant disposées en regard et à légère distance **e** l'une de l'autre, de sorte que le canal condenseur 17 est formé par l'interstice existant entre les cassettes.

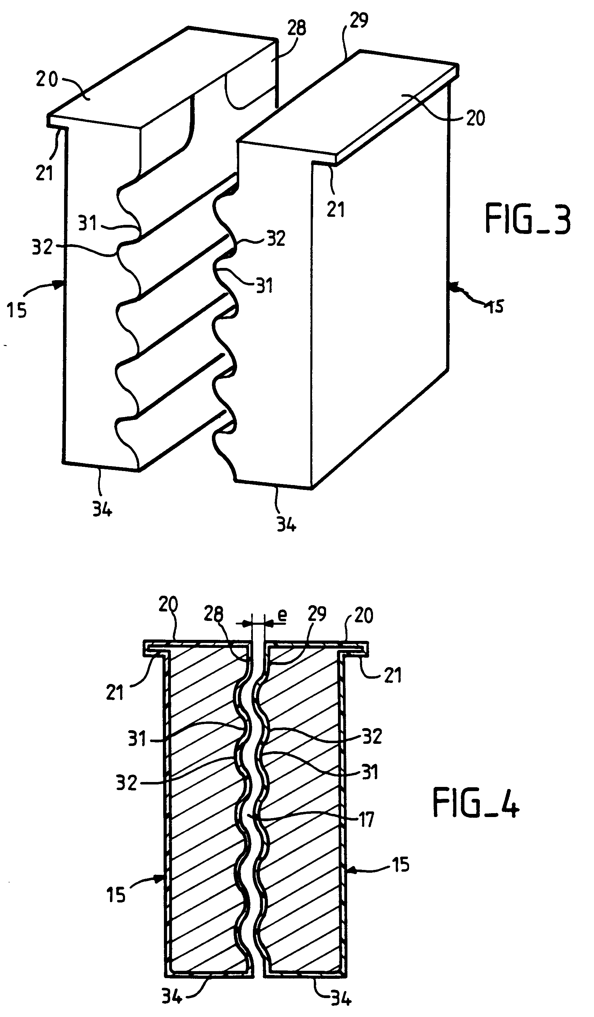

Sur les figures 1 et 2, les deux cassettes 15 sont de forme sensiblement parallélépipédique et s'étendent verticalement dans la boîte 13 en étant maintenues en place de façon amovible au moyen d'éléments d'assemblage appropriés. A cet effet, comme illustré à la figure 2, chacune des deux cassettes 15 comporte présentement, au niveau de sa face supérieure 20, un épaulement transversal 21 (visible à la figure 3) venant reposer sur une traverse 22 formée d'équerre dans la paroi interne de la face latérale correspondante 18, respectivement 24, de la boîte 13.

Comme le montre la figure 2, le bord supérieur de la face latérale 24 de la boîte 13 comporte un axe d'articulation 26 sur lequel est monté pivotant un volet 27 permettant, en position levée (représentée en traits interrompus sur la figure 2), l' introduction et le retrait des deux cassettes amovibles 15.

Lors de la cuisson, la boîte 13 est fermée de façon étanche par le volet 27 grâce à un joint d'étanchéité (non figuré).

Par ailleurs, les deux cassettes amovibles 15 sont entreposées dans le freezer d'un réfrigérateur avant utilisation, de manière à permettre la congélation de l'eau qu'elles contiennent.

On notera que grâce à leur amovibilité, la boîte 13 et chacune des deux cassettes 15 sont facilement nettoyables, même dans un lave-vaisselle.

En outre, les deux cassettes 15 présentent chacune un orifice de remplissage d'eau (non figuré) destiné à être fermé de façon hermétique par un bouchon ou analogue.

En référence aux figures 3 et 4, les deux cassettes verticales 15 comportent, sur toute la hauteur de leurs faces latérales respectives 28,29 destinées à venir en regard et à distance l'une de l'autre pour former entre elles le canal condenseur 17 (figure 4), des ondulations identiques constituées par des reliefs 31 et des creux 32, lesquels reliefs 31 et creux 32 d'une même face latérale s'étendent sur toute la largeur de celle-ci, d'une manière complémentaire aux reliefs et creux de la face latérale opposée.

Ainsi, comme le montre la figure 4, le canal 17 présente une section verticale en forme de serpentin, de largeur déterminée **e**, par exemple de l'ordre de 3 à 5 millimètres, délimité par les deux profils ondulés respectifs des deux faces latérales 28,29 des deux cassettes 15.

Dans la réalisation représentée à la figure 2, la face inférieure 34 de chacune des deux cassettes verticales 15 est espacée du fond 35 de la boîte 13 de façon à créer une zone inférieure 36 dans laquelle débouche la sortie 37 du canal 17 et qui est destinée à collecter le condensat. Cette zone collectrice 36 formée à même la boîte 13 remplace avantageusement tout bac collecteur rapporté en dessous de la boîte.

Dans cette réalisation, la face supérieure 20 (figure 2) de chacune des deux cassettes verticales 15 est, quant à elle, espacée du volet 27 de la boîte 13 en position fermée de façon à créer une zone supérieure 41 dans laquelle débouche l'entrée 42 du canal 17 et qui est destinée à recevoir les vapeurs de cuisson au travers d'une courte tubulure d'admission 44, dont l'entrée est désignée en 45, et qui est formée par une partie coudée de la face latérale 18 de la boîte 13.

Sur la figure 1, on a représenté en 47 un conduit destiné à relier, au cours de la cuisson (le couvercle 7 étant fermé), le volume supérieur 48 de la cuve de cuisson 3 à la boîte 13 afin d'assurer l'écoulement des vapeurs de cuisson. Ce conduit 47 comporte présentement deux tronçons communiquant directement l'un avec l'autre, à savoir un tronçon amont 49 intégré dans le couvercle 7 et débouchant, par une extrémité 50, dans le volume supérieur 48 de la cuve, et un tronçon aval 52 formé dans la masse du boîtier 2 et présentant une extrémité 54 qui débouche de la face arrière 19 du boîtier et qui communique directement avec l'orifice d'admission 45 de la boîte 13.

De préférence, la boîte 13 et les deux cassettes 15 sont réalisées en une matière plastique transparente, par exemple du type polyamide, et les deux cassettes 15 contiennent une solution d'eau colorée par un colorant non toxique, tel que par exemple du bleu de méthylène, à une concentration telle que la solution d'eau colorée change de couleur entre son état liquide et son état solide (glace). Ce changement de couleur constitue avantageusement un indicateur d'état de l'eau contenue dans les deux cassettes, visible de l'extérieur de la boîte 13.

A titre d'exemple non limitatif, une solution d'eau distillée colorée avec du bleu de méthylène à une concentration de 10⁻⁶ est bleue à l'état liquide et devient incolore à l'état solide.

En se référant à la figure 1, l'évacuation et l'élimination des vapeurs présentes dans la friteuse s'effectuent de la manière suivante.

Au cours de la friture, les vapeurs (symbolisées par les flèches) qui se dégagent et qui contiennent les substances odorantes inopportunes, s'échappent par les tronçons amont 49 et aval 52 du conduit 47 et passent dans la zone supérieure 41 de la boîte 13 via l'orifice d'admission 45. Elles sont alors dirigées de haut en bas dans le canal condenseur 17 délimité par les deux cassettes d'eau congelée 15 au contact desquelles elles se condensent, l'eau de condensation contenant les odorants inopportuns arrivant dans la zone collectrice 36 de la boîte 13.

## Revendications

1. Appareil de cuisson, tel que par exemple une friteuse, comprenant un boîtier ouvert (2) destiné à être fermé par un couvercle (7) pendant la phase de cuisson, une cuve de cuisson (3) placée dans le boîtier (2), et un dispositif (12) de condensation des vapeurs de cuisson comportant une boîte étanche (13) placée à l'extérieur du boîtier (2), reliée à la cuve (3) par des moyens de liaison (47) permettant l'écoulement des vapeurs de cuisson, et contenant des cassettes réfrigérantes hermétiques (15) qui s'étendent verticalement dans la boîte et qui sont disposées en regard et à légère distance l'une de l'autre pour former entre elles un canal condenseur (17) à travers lequel s'écoulent les vapeurs de cuisson,
**caractérisé en ce que** les cassettes (15) étant au nombre de deux, lesdites cassettes (15) comportent respectivement, en vis-à-vis, deux faces latérales (28,29) qui présentent chacune, en section verticale, un profil ondulé constituant un des deux bords du canal condenseur (17), le profil ondulé de l'une desdites faces latérales épousant, à légère distance, celui de l'autre face latérale.

2. Appareil de cuisson selon la revendication 1,
**caractérisé en ce que** les deux cassettes (15) contiennent de l'eau congelée.

3. Appareil de cuisson selon la revendication 1 ou 2,
**caractérisé en ce que** la boîte (13) est montée amovible sur une face dite arrière (19) du boîtier (2) de l'appareil.

4. Appareil de cuisson selon l'une des revendications 1 à 3,
**caractérisé en ce que** les deux cassettes (15) sont montées amovibles à l'intérieur de la boîte (13), et en ce qu'un volet (27) est monté articulé sur un bord supérieur de la boîte pour permettre l'introduction et le retrait des cassettes (15), la boîte (13) étant fermée de façon étanche par le volet (27) lors de la cuisson.

5. Appareil de cuisson selon l'une quelconque des revendications précédentes,
**caractérisé en ce que** les deux cassettes (15) comportent des faces inférieures respectives (34) qui sont espacées du fond (35) de la boîte (13) de façon à créer une zone inférieure (36) dans laquelle débouche la sortie du canal (17) et qui est destinée à collecter le condensat.

6. Appareil de cuisson selon la revendication 4 ou 5,
**caractérisé en ce que** les deux cassettes (15) comportent des faces supérieures respectives (20) qui sont espacées du volet fermé (27) de la boîte (13) de façon à créer une zone supérieure (41) dans laquelle débouche l'entrée du canal (17) et qui est destinée à recevoir les vapeurs de cuisson au travers d'un orifice (45) ménagé dans une face latérale (18) de la boîte (13), à un niveau supérieur à celui desdites faces supérieures respectives des cassettes.

7. Appareil de cuisson selon la revendication 6,
**caractérisé en ce que** ladite face latérale (18) de la boîte (13) est appliquée contre la face arrière (19) du boîtier (2) au moyen d'éléments de fixation, et en ce que les moyens de liaison entre la cuve (3) et le dispositif de condensation (12) comportent un conduit (47) d'écoulement des vapeurs de cuisson qui est intégré dans l'appareil d'une manière telle qu'au cours de la cuisson, d'une part, une (50) de ses extrémités débouche dans la cuve de cuisson (3), et d'autre part, son autre extrémité (54) communique directement avec l'orifice (45) de ladite face latérale (18) de la boîte (13).

8. Appareil de cuisson selon l'une quelconque des revendications précédentes,
**caractérisé en ce que** la boîte (13) et les cassettes (15) sont réalisées chacune en une matière plastique transparente, et en ce que l'eau est colorée par un colorant non toxique ayant une concentration telle que l'eau colorée change de couleur entre son état liquide et son état solide, ce changement de couleur constituant un indicateur d'état de l'eau contenue dans les deux cassettes, visible de l'extérieur de la boîte (13).

9. Appareil de cuisson selon la revendication 8,
**caractérisé en ce que** l'eau utilisée est de l'eau distillée, et en ce que le colorant est du bleu de méthylène à une concentration de l'ordre de 10⁻⁶, une telle eau colorée étant bleue à l'état liquide et incolore à l'état solide.

10. Appareil de cuisson selon la revendication 8,
**caractérisé en ce que** la matière plastique de la boîte (13) et des cassettes (15) est un polyamide.

11. Appareil de cuisson selon l'une des revendications 4 à 10,
**caractérisé en ce que** les cassettes amovibles (15) sont destinées à être entreposées dans le freezer d'un réfrigérateur avant utilisation.

## Claims

1. A cooking device, such as for example a frying device, comprising an open housing (2) designed to be closed by a cover (7) during the cooking phase, a cooking vessel (3) placed in the housing (2) and a cooking vapour condensation device (12) comprising a sealed casing (13), located outside the housing (2) and connected to the vessel (3) by connecting means (47) allowing the cooking vapours to flow out, and containing hermetically sealed cooling cassettes which extend vertically in the casing and are disposed facing one another with a small gap to form a condensing channel (17) between them through which the cooking vapours flow, characterised in that the cassettes (15) are two in number and the said cassettes (15) comprise respectively, facing one another, two lateral faces (28, 29) each of which comprises, in vertical cross-section, an undulating profile constituting one of the sides of the condensing channel (17), the undulating profile of one of the said lateral faces matching, with a small gap, that of the other lateral face.

2. A cooking device according to claim 1, characterised in that the two cassettes (15) contain frozen water.

3. A cooking device according to claim 1 or claim 2, characterised in that the casing (13) is removably mounted on a face called the rear face (19) of the housing (12) of the device.

4. A cooking device according to any one of claims 1 to 3, characterised in that the two cassettes (15) are removably fitted inside the casing (13) and in that a flap (27) is mounted to pivot on an upper edge of the casing to enable the insertion and removal of the cassettes (15), the casing (13) being closed in a sealed manner by the flap (27) during cooking.

5. A cooking device according to any one of the preceding claims, characterised in that the two cassettes (15) comprise respective lower surfaces (34) which are spaced from the bottom (35) of the casing (13) so as to form a lower region (36) into which the outlet of the channel (17) opens and which is designed to collect the condensate.

6. A cooking device according to claim 4 or claim 5, characterised in that the two cassettes comprise respective upper surfaces (20) which are spaced from the closed flap (27) of the casing (13) so as to create an upper region (41) into which the inlet of the channel (17) opens and which is designed to receive the cooking vapours through an orifice (45) made in a lateral face (18) of the casing (13) at a higher level than that of the said respective upper surfaces of the cassettes.

7. A cooking device according to claim 6, characterised in that the said lateral face (18) of the casing (13) is applied against the rear face (19) of the housing (2) by means of fixing elements, and in that the connecting means between the vessel (3) and the condensing device (12) comprise a channel (47) for the cooking vapours to flow through which is integrated in the device in such a manner that during cooking, on the one hand, one (50) of its ends opens into the cooking vessel (3) and, on the other hand, its other end (54) communicates directly with the orifice (45) in the said lateral face (18) of the casing (13).

8. A cooking device according to any one of the preceding claims, characterised in that the casing (13) and the cassettes (15) are each made of a transparent plastic, and in that the water is coloured by a non-toxic colorant having a concentration such that the coloured water changes colour when it changes from its liquid state to its solid state, this change of colour constituting an indicator of the state of the water in the two cassettes which is visible from outside the casing (13).

9. A cooking device according to claim 8, characterised in that the water used is distilled water and in that the colorant used is methylene blue at a concentration of approximately 10⁻⁶, such coloured water being blue in the liquid state and colourless in the solid state.

10. A cooking device according to claim 8, characterised in that the plastic material of the casing (13) and the cassettes (15) is a polyamide.

11. A cooking device according to any one of claims 4 to 10, characterised in that the removable cassettes (15) are adapted to be stored in the freezer of a refrigerator before use.

## Patentansprüche

1. Kochgerät, beispielsweise eine Friteuse mit einem offenen Gehäuse (2), das während der Kochphase durch einen Deckel (7) verschlossen ist, einem im Gehäuse (2) angeordneten Fritiertopf (3) und einer Kondensiervorrichtung (12) für die Kochdämpfe mit einem dichten Behälter (13), der außerhalb des Gehäuses (2) angeordnet und mit dem Gehäuse (2) durch Verbindungselemente (47) verbunden ist, das Durchströmen von Kochdämpfen gestattet und hermetisch verschlossene Kühlkassetten (15) enthält, die sich im Behälter vertikal erstrecken und einander gegenüber und in geringem Abstand voneinander angeordnet sind, um zwischen sich einen Kühlkanal (17) zu bilden, durch den die Kochdämpfe strömen, **dadurch gekennzeichnet, daß** zwei der Kassetten (15) vorhanden sind und diese Kassetten (15) jeweils einander gegenüber zwei Seitenflächen (28,29) aufweisen, die jede im vertikalen Schnitt ein Wellenprofil zeigen und je eine der zwei Ränder des Kühlkanals (17) bilden, wobei das Wellenprofil der einen der Seitenflächen in einem geringen Abstand demjenigen der anderen Seitenfläche folgt.

2. Kochgerät nach Anspruch 1, **dadurch gekennzeichnet, daß** die zwei Kassetten (15) gefrorenes Wasser enthalten.

3. Kochgerät nach Anspruch 1 oder 2, **dadurch gekennzeichnet, daß** der Behälter (13) abnehmbar an einer sogenannten Rückseite (19) des Gehäuses (2) des Gerätes montiert ist.

4. Kochgerät nach einem der Ansprüche 1 bis 3, **dadurch gekennzeichnet, daß** die zwei Kassetten (15) abnehmbar im Inneren des Behälters (13) gehalten sind und daß an einem oberen Rand des Behälters eine Klappe (27) angelenkt ist, um das Einsetzen und Herausnehmen der Kassetten (15) zu ermöglichen, wobei der Behälter (13) durch die Klappe (27) beim Kochvorgang dicht verschlossen ist.

5. Kochgerät nach einem der vorangehenden Ansprüche, **dadurch gekennzeichnet, daß** die zwei Kassetten (15) jeweils Unterseiten (34) aufweisen, die sich in einem Abstand vom Boden (35) des Behälters (13) befinden, um einen unteren Bereich (36) zu bilden, in dem der Ausgang des Kanals (17) mündet und der zum Auffangen des Kondensats bestimmt ist.

6. Kochgerät nach Anspruch 4 oder 5, **dadurch gekennzeichnet, daß** die zwei Kassetten (15) jeweils obere Seiten (20)aufweisen, die sich in einem Abstand vom geschlossenen Deckel (27) des Behälters (13) befinden, um so einen oberen Bereich 41 zu bilden, in dem der Einlaß des Kanals (17) mündet und der zur Aufnahme der Kochdämpfe dient, die durch eine in einer Seitenfläche (18) des Behälters (13) auf einem höheren Niveau als das der jeweiligen Oberseiten der Kassetten ausgebildete Einlaßöffnung (45) eintreten.

7. Kochgerät nach Anspruch 6, **dadurch gekennzeichnet, daß** die Seitenfläche (18) des Behälters (13) gegen die Rückseite (19) des Gehäuses (2) mittels Befestigungselementen gehalten ist und daß das Verbindungsmittel zwischen dem Fritiertopf (3) und der Kondensiervorrichtung (12) eine Leitung (47) für das Durchströmen der Kochdämpfe aufweist, die in das Gerät so integriert ist, daß während des Fritierens einerseits eines (50) ihrer Enden im Fritiertopf (3) mündet und andererseits ihr anderes Ende (54) direkt mit der Einlaßöffnung (45) der Seitenfläche (18) des Behälters (13) in Verbindung steht.

8. Kochgerät nach einem der vorangehenden Ansprüche, **dadurch gekennzeichnet, daß** der Behälter (13) und die Kassetten (15) sämtlich aus einem transparenten Kunststoffmaterial hergestellt sind und daß das Wasser durch einen ungiftigen Farbstoff mit einer solchen Konzentration gefärbt ist, daß das gefärbte Wasser zwischen seinem flüssigen Zustand und seinem festen Zustand (Eis) die Farbe wechselt, wobei dieser Farbwechsel einen Indikator für den Zustand des in den zwei Kassetten enthaltenen Wassers darstellt, der von außerhalb des Behälters (13) sichtbar ist.

9. Kochgerät nach Anspruch 8, **dadurch gekennzeichnet, daß** das verwendete Wasser destilliertes Wasser ist und daß der Farbstoff Methylenblau mit einer Konzentration der Größenordnung von 10⁻⁶ ist und daß ein solches gefärbtes Wasser im flüssigen Zustand blau und im festen Zustand farblos ist.

10. Kochgerät nach Anspruch 8, **dadurch gekennzeichnet, daß** das Kunststoffmaterial des Behälters (13) und der Kassetten (15) ein Polyamid ist.

11. Kochgerät nach einem der Ansprüche 4 bis 10, **dadurch gekennzeichnet, daß** die abnehmbaren Kassetten (15) dazu bestimmt sind, daß sie vor der Verwendung im Gefrierfach eines Kühlschranks aufbewahrt werden.
